# EUROPEAN PATENT SPECIFICATION

(11) **EP 2 696 584 B1**
(45) Date of publication and mention of the grant of the patent: **13.09.2017**
(21) Application number: 13176907.7
(22) Date of filing: 17.07.2013
(51) Int. Cl.: H04N 9/04, H04N 9/64, G02B 7/36, G02B 7/38, H04N 5/217, H04N 5/232, H04N 9/77

(54) **Image capturing device and image capturing method**
Bilderfassungsvorrichtung und Bilderfassungsverfahren
Dispositif et procédé de capture d'image

(30) Priority: 06.08.2012 JP 2012174327; 25.03.2013 JP 2013061779
(43) Date of publication of application: 12.02.2014
(73) Proprietor: Ricoh Company, Ltd., Tokyo 143-8555 (JP)
(72) Inventor: Hohjoh, Daisuke, Tokyo 143-8555 (JP)
(74) Representative: J A Kemp

(56) References cited:
- JP-A- H10 200 904
- JP-A- 2011 109 496
- US-A- 5 121 445
- US-A- 5 173 788
- US-A1- 2008 192 139
- US-A1- 2008 303 919

## Description

### BACKGROUND

### Technical Field

The present invention relates to an image capturing device not equipped with an optical low-pass filter, an image capturing device that can detect occurrence of color moiré, and an image capturing method.

### Background Art

Image capturing devices (hereinafter, digital cameras) have an optical lens moveable along an optical axis, and an image capturing element, in which an object image is focused on a light receiving face of the image capturing element via the optical lens, and image data is generated based on an image signal output from the image capturing element and stored. Digital cameras are known to have a problem of moiré.

Typically, the image capturing element used for digital cameras is composed of square pixels arranged in a regular pattern. The object image focused on faces of pixels of the image capturing element (light receiving face) via the optical lens is sampled using a sampling frequency such as the Nyquist frequency and then output as electrical signals. In this configuration, if the spatial frequency of the object is greater than one-half (1/2) of the Nyquist frequency, normal sampling cannot be conducted.

The image signal of the object including this type of high-frequency component includes aliases (i.e., folding noise) having false frequencies. If the image data is generated using the image signal including the aliases, the moiré may occur to the image, thereby altering or distorting part of the image.

Moiré includes luminance moiré (spurious resolution), color moiré (false color) and so on, and occurs with digital cameras because pixels of the image capturing element are arranged in a regular pattern, and therefore the sampling frequency at any given pixel at any given position may become a uniform frequency. In contrast, moiré does not occur with film cameras (analog cameras) because the film particles are arranged randomly.

The occurrence of moiré can be suppressed or reduced by setting the spatial frequency of the object smaller than the Nyquist frequency before sampling the image signals from the image capturing element, which means the high-frequency component greater than the Nyquist frequency included in the spatial frequency of the object is eliminated. The high-frequency component can be eliminated by using an optical low-pass filter.

The optical low-pass filter uses birefringence of crystalline quartz to separate an image into a given width. For example, the optical low-pass filter may include two birefringence plates and one 1/4λ wavelength plate sandwiched by the two birefringence plates. Digital cameras with replaceable lenses and some compact digital cameras employ optical low-pass filters conducting four-point separation. By disposing the optical low-pass filter between the optical lens and the light receiving face of the image capturing element, the high-frequency component that may cause moiré can be reduced.

However, because the optical low-pass filter affects the low-frequency component in addition to the frequencies greater than the Nyquist frequency, an image captured by using the optical low-pass filter becomes an out-of-focus image as a whole. Further, the optical low-pass filter, which is a relatively expensive part among parts of the digital camera, may increase manufacturing cost of the digital camera. Further, the higher the resolution performance of the attached lens, the greater the occurrence of moiré. Therefore, when a high performance lens is used, a stronger optical low-pass filter is required to suppress moiré and therefore high resolution-lenses cannot be used to full effectiveness.

To store images using the resolution of the lens effectively, it is preferable not to use the optical low-pass filter (i.e., without optical low-pass filter). For example, some digital cameras omitting the optical low-pass filter use an image capturing element arranging pixels randomly to suppress occurrence of color moiré, or an image capturing element having a three-layered structure for red, green, and blue (RGB) to suppress the occurrence of color moiré. These types of digital camera may need specific color interpolation hardware, and further, transmittance performance may not be good, thereby color reproduction performance and sensitivity may not be satisfactory.

Heretofore, by taking advantage of the fact that the contrast in low-frequency regions has a peak similar to the contrast in high-frequency region, the occurrence of moiré has been detectable based on the peak positions of contrast data for high-frequency regions and low-frequency regions. For example, if moiré will occur, the focus is deviated for an image capturing device as disclosed in JP-4364078-B (JP-2006-17960-A).

The image capturing device disclosed in JP-4364078-B has an image capturing device that does not use an optical low-pass filter. If a given condition causing moiré is satisfied, the optical lens is deviated from a focal position when capturing an image to prevent the occurrence of moiré. However, by deviating the focal position of the optical lens, image resolution may deteriorate, which means the resolution of the optical lens cannot be used to full effect.

Further, compared to luminance moiré, color moiré affects image quality greatly. However, the image capturing device of JP-4364078-B cannot suppress or reduce the occurrence of color moiré. Further, the above-mentioned deviation cannot be used if a user desires to capture an image without deviation of the focal position. Further, the above mentioned deviation cannot be used if a user desires to cope with color moiré by controlling the size of the lens aperture without deviating the focal position.

JP-A-H10/200904 discloses a device to control a position of an image pickup lens based on a contrast of a video signal read from an image pickup element 3 resulting from an object image by an image pickup lens 1. In this case, one color signal among a plurality of color signals included in the video signal is used with priority to move the image pickup lens 1 so that the focal position of the color signal appears before a focal plane of the image pickup lens 1 and the focusing is finished by moving the image pickup lens 1 in the same direction by a prescribed distance from the position of the image pickup lens at which the contrast of the one color signal indicates a maximum value.

US-A-2008/303919 discloses an image pickup device includes a signal processing unit which processes a signal generated by separating a luminous signal into wavelength components of two or more colors by use of a sensor unit including two-dimensionally arranged pixels to which a wavelength separating unit for separating light wavelengths is arranged at a front face of a photoelectric converting element which converts the luminous signal condensed by an optical lens unit into electric signals, wherein the optical lens unit includes at least one optical lens having different focusing positions in accordance with the wavelengths of the luminous signal, and the signal processing unit includes an outline signal generating unit which extracts an outline signal from an output signal of the sensor unit.

JP-A-2011/109496 discloses an imaging apparatus including: an imaging part for capturing an image; a color difference signal calculating part for calculating a color difference signal of the image; a detection part for detecting a region, wherein a false color occurs, from any one image, when two images having different focal states are defined as a first image and a second image, on the basis of a differential between the color difference signals of these first and second images and detecting a region corresponding to the region, where the false color occurs, from the other image; and a false color correcting part for replacing a color difference signal, which is obtained by mixing a color difference signal in the region where the false color occurs and a color difference signal in the corresponding region, with the color difference signal in the region, where the false color occurs, while using a coefficient based on the differential.

US-A-5 173 788 discloses in an image reading device for reading an original image, an original image is picked up and converted into two-dimensional positional image data represented in a two-dimensional positional coordinate system. The two-dimensional positional image data is further converted into two-dimensional spatial frequency coordinate system, and then into high frequency image data and low frequency image data. The high frequency image data is subjected to moire component selecting and depressing options to correct the high frequency image data whose moire components are depressed, and then the low frequency image data and the corrected high frequency image data are reconverted into corrected two-dimensional positional image data, thereby reproducing the original image with no moire.

US-A-5 121 445 discloses a method of reading image wherein an original image is read with two different sampling intervals, and undesirable signal components are removed from the read image signals. An apparatus for reading image wherein an original image is read with different sampling intervals by reading devices of two systems; outputs of the reading devices are A/D converted and subjected to an orthogonal function transformation; a converted signal of smaller absolute value is subjected to an inverse orthogonal function transformation to produce a read image signal.

US-A-2008/192139 & JP-B-4 364 078 discloses an image capture method, calculating a first focal length from acquired image data, and detecting whether or not there is-moiré in the image of the first focal length and carrying out image capture with the first focal length set as an image capture focal length when there is no moiré in the image data of the first focal length, calculating a specified range from acquired image data when there is moiré in the image data of the first focal length, and carrying out respective image captures with a plurality of focal lengths within this specified range set as image capture focal length.

### SUMMARY

The present invention is directed to an image capturing device that can detect color moiré. The image capturing device includes an optical lens; an image capturing element having a light receiving face on which is focused an image of an object using the optical lens, an image signal output from the image capturing element being generated as image data and stored; a contrast data computing means to compute contrast data based on the image data; a color data computing means to compute color data based on the image data; a first lens position determining means to determine a first lens position of the optical lens where the contrast data peaks based on the contrast data, with the first lens position focusing an object image onto the light receiving face; a second lens position determining means to determine a second lens position of the optical lens where the color data becomes a peak based on the color data; and a determining means to compute a difference between the first lens position and the second lens position and compare the difference and a threshold set in advance, wherein the determining means determines that color moiré occurs when the difference is smaller than the threshold.

The present invention is also directed to a method of capturing an image using an image capturing device including an optical lens, an image capturing element having a light receiving face on which is focused an image of an object using the optical lens, an image signal output from the image capturing element being generated as image data and stored, a contrast data computing means, a color data computing means, a first lens position determining means, a second lens position determining means, and a determining means. The method includes the steps of 1) computing the contrast data using the contrast data computing means; 2) computing the color data using the color data computing means; 3) determining the first lens position where the contrast data peaks using the first lens position determining means; 4) determining the second lens position where the color data peaks using the second lens position determining means; 5) computing a difference between the first lens position and the second lens position using the determining means; 6) determining whether the difference is greater than a given threshold using the determining means; and 7) determining that color moiré occurs when the determining step 6) determines that the difference is smaller than the threshold. The present invention is also directed to a non-transitory computer-readable carrier medium storing a program that, when executed by a computer, causes the computer to execute a method of capturing an image using an image capturing device including an optical lens, an image capturing element having a light receiving face on which is focused an image of an object using the optical lens, an image signal output from the image capturing element being generated as image data and stored, a contrast data computing means, a color data computing means, a first lens position determining means, a second lens position determining means, and a determining means. The method includes the steps of 1) computing the contrast data using the contrast data computing means; 2) computing the color data using the color data computing means; 3) determining the first lens position where the contrast data peaks using the first lens position determining means; 4) determining the second lens position where the color data peaks using the second lens position determining means; 5) computing a difference between the first lens position and the second lens position using the determining means; 6) determining whether the difference is greater than a given threshold using the determining means; and 7) determining that color moiré occurs when the determining step 6) determines that the difference is smaller than the threshold.

The present invention is also directed to a computer-readable program that, when executed by a computer, causes the computer to execute a method of capturing an image using an image capturing device including an optical lens, an image capturing element having a light receiving face on which is focused an image of an object using the optical lens, an image signal output from the image capturing element being generated as image data and stored, a contrast data computing means, a color data computing means, a first lens position determining means, a second lens position determining means, and a determining means. The method includes the steps of 1) computing the contrast data using the contrast data computing means; 2) computing the color data using the color data computing means; 3) determining the first lens position where the contrast data peaks using the first lens position determining means; 4) determining the second lens position where the color data peaks using the second lens position determining means; 5) computing a difference between the first lens position and the second lens position using the determining means; 6) determining whether the difference is greater than a given threshold using the determining means; and 7) determining that color moiré occurs when the determining step 6) determines that the difference is smaller than the threshold.

### BRIEF DESCRIPTION OF THE DRAWINGS

A more complete appreciation of the disclosure and many of the attendant advantages and features thereof can be readily obtained and understood from the following detailed description with reference to the accompanying drawings, wherein:
FIG. 1 show an example of an object that color moiré may occur;
FIG. 2 shows an example profile of change of contrast data obtained by capturing images of an object that occurs color moiré by an image capturing device;
FIG. 3 shows an example profile of change of color component difference data obtained by capturing images of an object that occurs color moiré by an image capturing device;
FIG. 4 shows an example profile of change of white balance data obtained by capturing images of an object that occurs color moiré by an image capturing device;
FIG. 5 shows an example profile of change of contrast data obtained by capturing images of an object that does not occur color moiré by an image capturing device;
FIG. 6 shows an example profile of change of color component difference data obtained by capturing images of an object that does not occur color moiré by an image capturing device;
FIG. 7 shows an example profile of change of white balance data obtained by capturing images of an object that does not occur color moiré by an image capturing device;
FIG. 8 shows a block diagram of an image capturing device such as a digital camera according to an example embodiment;
FIG. 9 shows a flowchart of a method of image capturing conduct-able by the image capturing device;
FIG. 10 shows examples of captured images having conducted with or without color difference noise reduction processing according to an example embodiment;;
FIG. 11 shows examples of another captured images having conducted with or without color difference noise reduction processing; and
FIGs. 12A and 12B show a flowchart of a method of image capturing conduct-able by the image capturing device according to another example embodiment.

The accompanying drawings are intended to depict exemplary embodiments of the present invention and should not be interpreted to limit the scope thereof. The accompanying drawings are not to be considered as drawn to scale unless explicitly noted, and identical or similar reference numerals designate identical or similar components throughout the several views.

### DETAILED DESCRIPTION

A description is now given of exemplary embodiments of the present invention. It should be noted that although such terms as first, second, etc. may be used herein to describe various elements, components, regions, layers and/or sections, it should be understood that such elements, components, regions, layers and/or sections are not limited thereby because such terms are relative, that is, used only to distinguish one element, component, region, layer or section from another region, layer or section. Thus, for example, a first element, component, region, layer or section discussed below could be termed a second element, component, region, layer or section without departing from the teachings of the present invention.

In addition, it should be noted that the terminology used herein is for the purpose of describing particular embodiments only and is not intended to be limiting of the present invention. Thus, for example, as used herein, the singular forms "a", "an" and "the" are intended to include the plural forms as well, unless the context clearly indicates otherwise. Moreover, the terms "includes" and/or "including", when used in this specification, specify the presence of stated features, integers, steps, operations, elements, and/or components, but do not preclude the presence or addition of one or more other features, integers, steps, operations, elements, components, and/or groups thereof.

Furthermore, although in describing views shown in the drawings, specific terminology is employed for the sake of clarity, the present disclosure is not limited to the specific terminology so selected and it is to be understood that each specific element includes all technical equivalents that, have a similar function, operate in a similar manner, and achieve a similar result. Referring now to the drawings, apparatuses or systems according to example embodiments of the present invention are described hereinafter.

A description is given of example embodiments of an image capturing device and an image capturing method of the present invention. The image capturing device can determine whether color moiré will occur before capturing images. Therefore, the occurrence of color moiré can be detected in advance, thereby a process to suppress or reduce color moiré can be conducted, and then an image can be recorded or stored.

### (Determination of color moiré)

Color moiré is also known as false color, in which a striped color pattern that is not included in an image occurs in the image. Typically, color moiré more likely occurs near a focal position. A description is given of a determination method of color moiré used for the image capturing device according to example embodiment. In general, as for an object that color moiré does not occur, color difference component does not change whether focused or not focused. When the focus processing is conducted, image data is generated with a given time interval while shifting positions of an optical lens, and by detecting fluctuation of the color difference component based on the image data generated with the given time interval, it can determine whether color moiré will occur or not for concerned image data.

In the focus processing such as automatic focus (AF) processing, image data is generated with a given time interval while shifting positions of an optical lens, and contrast data (AF evaluation value) used for determining the focal position is computed based on this image data. In this configuration, color data such as color component difference data (or color component difference evaluation value) and white balance data (or white balance evaluation value) are computed using the above mentioned image data.

A lens position corresponding to a peak of the contrast data becomes a focal position of the optical lens. The lens position corresponding to the focal position is referred to as a first lens position, hereinafter. While conducting the peak determination of the contrast data, the peak determination of the color component difference data or white balance data are also conducted. If no peak occurs to the color data (i.e., color component difference data, white balance data), color moiré does not occur. However, if a peak occurs to the color data, color moiré may occur. A lens position corresponding to a peak of the color data is referred to as a second lens position. Based on a positional relationship of the first lens position and the second lens position, it can determine whether color moiré may occur.

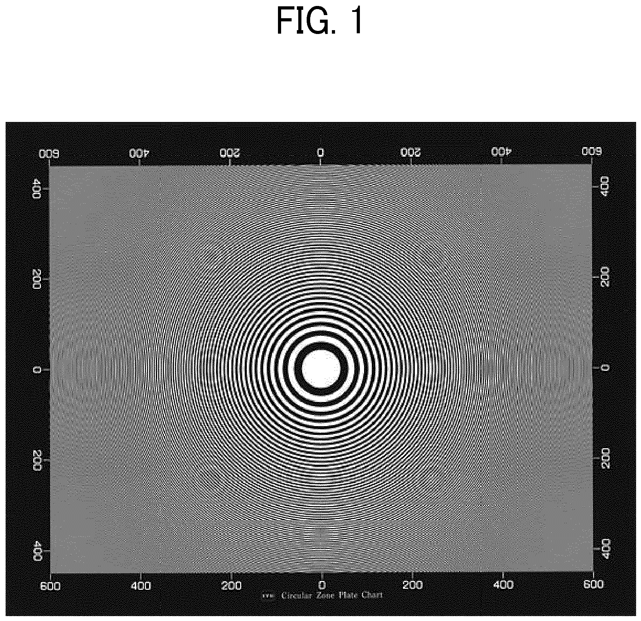

For example, FIG. 1 shows an example of a circular zone plate (CZP) chart, which is an object that can cause color moiré. As for the CZP chart, the resolution level gradually changes from the center to the peripheral, and the CZP chart can be used for evaluating color interpolation. As for the resolution level of the CZP chart shown in FIG. 1, the resolution level gradually changes from the liner-sweep of 0 TV at the center to the liner-sweep of 600 TV at the peripheral, in which spatial frequency gradually increases from the center to the peripheral.

Recent digital cameras use an image capturing element having, for example, 10 million pixels or more. When the CZP chart shown in FIG. 1 is captured by the digital camera with the same size, the frequency does not reach a half of the Nyquist frequency. However, even if the digital camera having this type of image capturing element is used, color moiré may occur. Specifically, if a suitable chart distance is computed based on the focus distance and the number of pixels and then the object is captured, color moiré may occur. For example, if the object is captured under a condition that the liner-sweep of near 500TV becomes the Nyquist frequency, color moiré may occur.

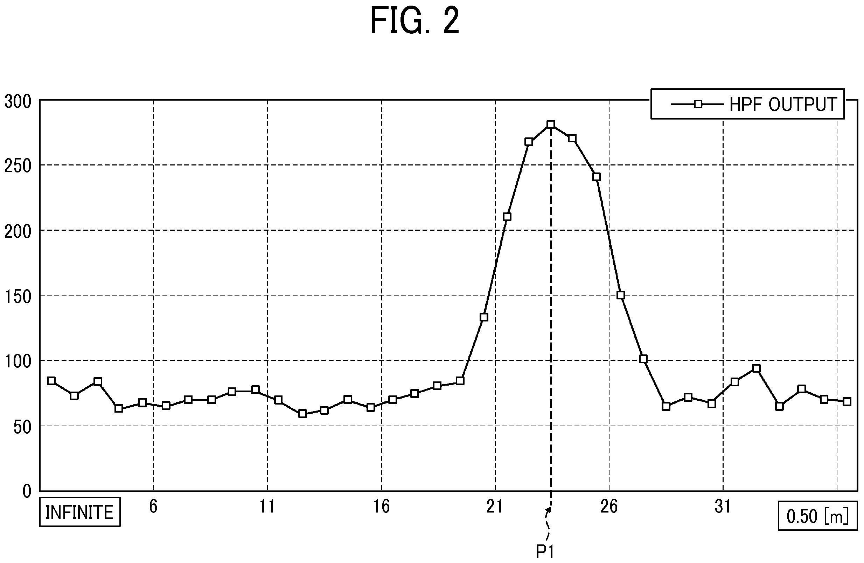

When the CZP chart (FIG. 1) is captured consecutively under the above capturing condition while shifting positions of the optical lens (i.e., while changing the focus distance), data shown in FIGs. 2 to 4 can be computed. FIGs. 2 to 4 show examples of profile of contrast data, color component difference data, chroma saturation, and white balance data obtained at each lens position under the above capturing condition.

FIG. 2 shows an example profile of change of contrast data, in which the horizontal axis represents the optical lens position, and the vertical axis represents the value of contrast data. The contrast data can be obtained by conducting a filtering process to image data using a digital high-pass filter (-1, 0, 2, 0, -1). The contrast data can be computed by shifting the lens position as shown in FIG. 2, in which the contrast data becomes a peak at a position corresponding to a lens position focused to the object such as CZP chart. Hereinafter, this position may be referred to as a first lens position P1.

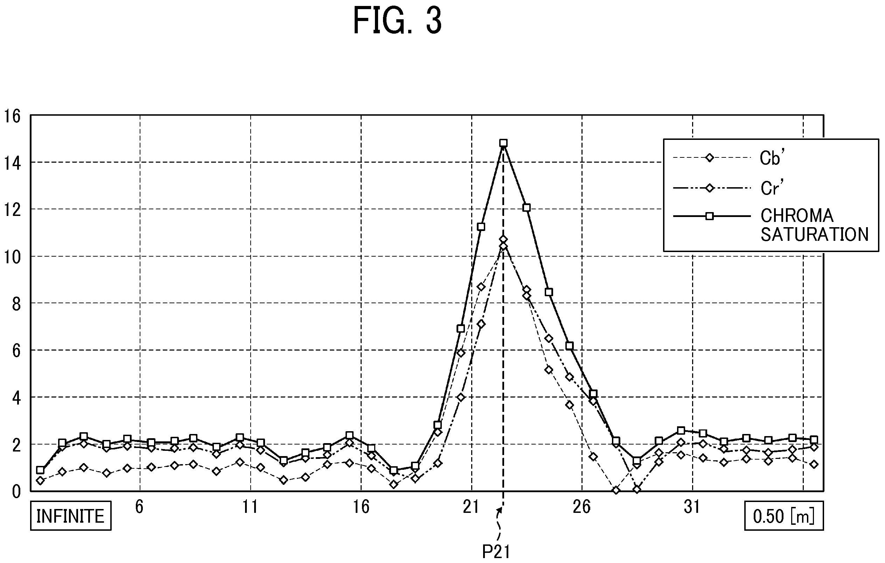

FIG. 3 shows an example profile of change of color component difference data, in which the horizontal axis represents the optical lens position, and the vertical axis represents the value of color component difference data and chroma saturation. The color component difference data is an absolute value of Cb/Cr component of image data using YUV format, which has received an image processing by a large scale integration (LSI) circuit used for image processing. Further, the chroma saturation is an indicator in Cb-Cr space computed by (Cb^2+Cr^2)^(0.5), in which Y component is not considered. The color component difference data and the chroma saturation can be computed by shifting the lens position as shown in FIG. 3, in which the color component difference data and chroma saturation data become a peak at a position corresponding to a lens position, which is referred to as a second lens position P21. The second lens position P21 is different from the first lens position P1 shown in FIG. 2.

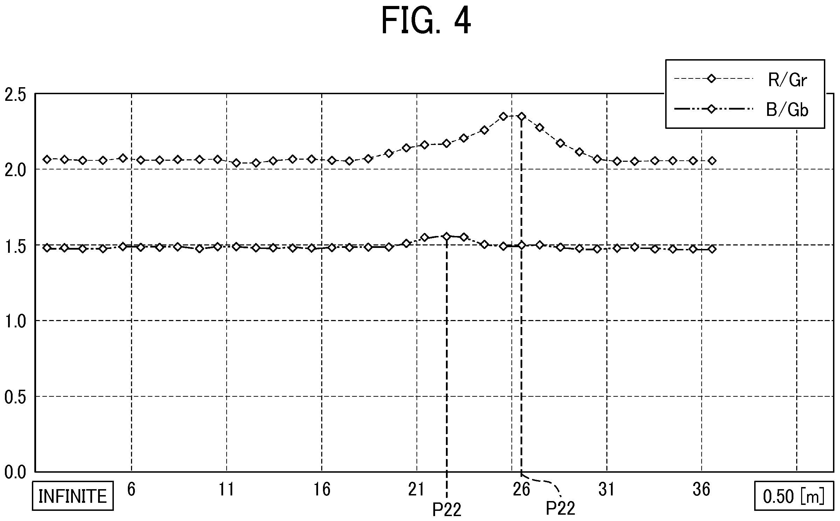

Further, FIG. 4 shows an example profile of change of white balance data, in which the horizontal axis represents the optical lens position, and the vertical axis represents the value of white balance data. The white balance data is a value of R/Gr component and a value of B/Gb component of image data having received various image processing by the LSI used for image processing. The white balance data can be computed by shifting the lens position as shown in FIG. 4, in which the white balance data becomes a peak corresponding to a position of a lens position, which is referred to as a second lens position P22 hereinafter. The second lens position P22 is different from the first lens position P1 but near to the first lens position P1 (FIG. 2).

When the contrast data and color data (i.e., color component difference data, white balance data) are computed under a condition that color moiré may occur, the contrast data and color data may fluctuate depending on the positions of the optical lens, and the peak appears for the contrast data and color data.

The first lens position P1 where the contrast data becomes peak and the second lens position P21 where the color component difference data becomes a peak are close with each other. Further, the first lens position P1 and the second lens position P22 where the white balance data becomes a peak are close with each other. If the second lens position P21 or the second lens position P22 exists, and a distance between the second lens position such as P21 or P22 and the first lens position P1 is shorter than a given distance, color moiré may occur on an image with higher probability.

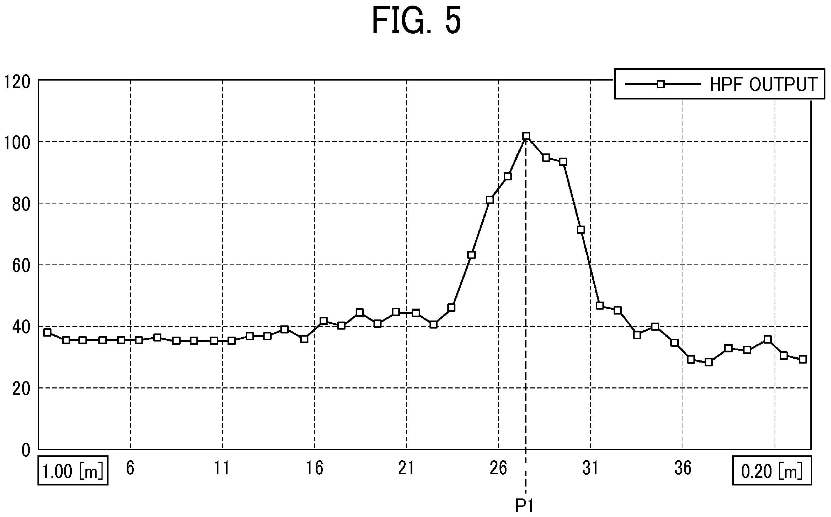

A description is given of change of the contrast data, color component difference data, chroma saturation, and white balance data when these data are computed similar to the above by using the Macbeth chart as an object that does not cause color moiré, in which RED patch of Macbeth chart is used. FIGs. 5 to 7 show examples of profiles of contrast data, color component difference data, chroma saturation, and white balance data obtained based on image data generated by consecutively capturing the RED patch while shifting positions of the optical lens (i.e., while changing the focus distance).

FIG. 5 shows an example profile of change of contrast data, in which the horizontal axis represents the optical lens position (focus distance), and the vertical axis represents the value of contrast data. The contrast data can be computed by shifting the lens position (i.e., changing focus distance) as shown in FIG. 5, in which the contrast data becomes a peak at a position corresponding to a lens position focused to the object such as RED patch, wherein this position is the first lens position P1.

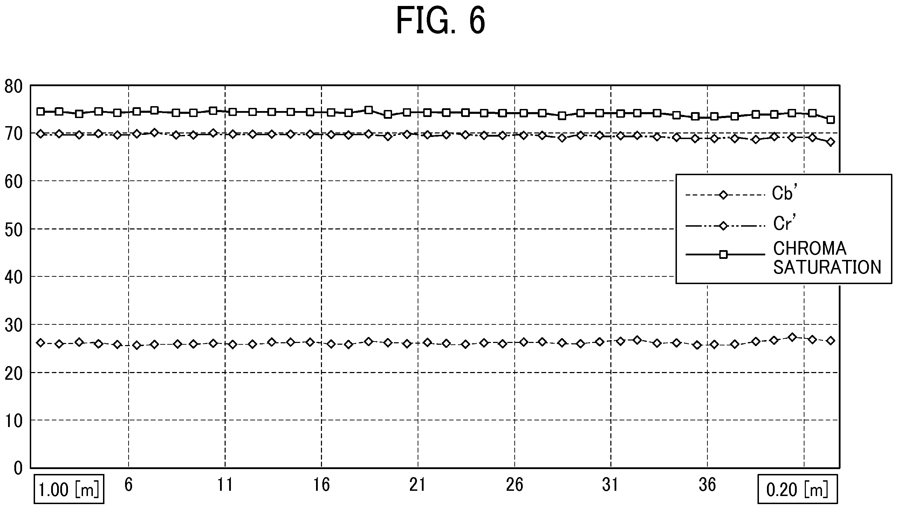

FIG. 6 shows an example profile of change of color component difference data, in which the horizontal axis represents the optical lens position, and the vertical axis represents the value of color component difference data and chroma saturation. As shown in FIG. 6, even if positions of the optical lens are shifted, the color component difference data are substantially constant (i.e., does not fluctuate substantially), thereby a peak does not occur to the color component difference data and chroma saturation.

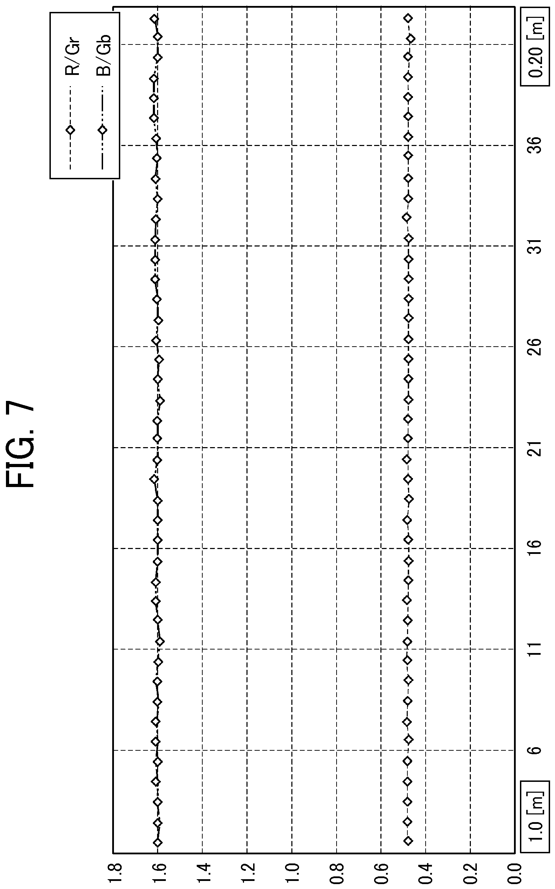

FIG. 7 shows an example profile of change of white balance data, in which the horizontal axis represents the optical lens position, and the vertical axis represents the value of white balance data. Similar to the color component difference data, as shown in FIG. 7, even if the positions of the optical lens are shifted, the white balance data are substantially constant (i.e., does not fluctuate substantially), thereby a peak does not occur to the white balance data.

As described above, when an object that may cause color moiré is captured, the peak appears to the color component difference data and the white balance data near the lens position (i.e., focal position) where the contrast data becomes a peak. In contrast, when an object that does not cause color moiré is captured, a peak does not appear to the color component difference data and the white balance data.

### (Block diagram of image capturing device)

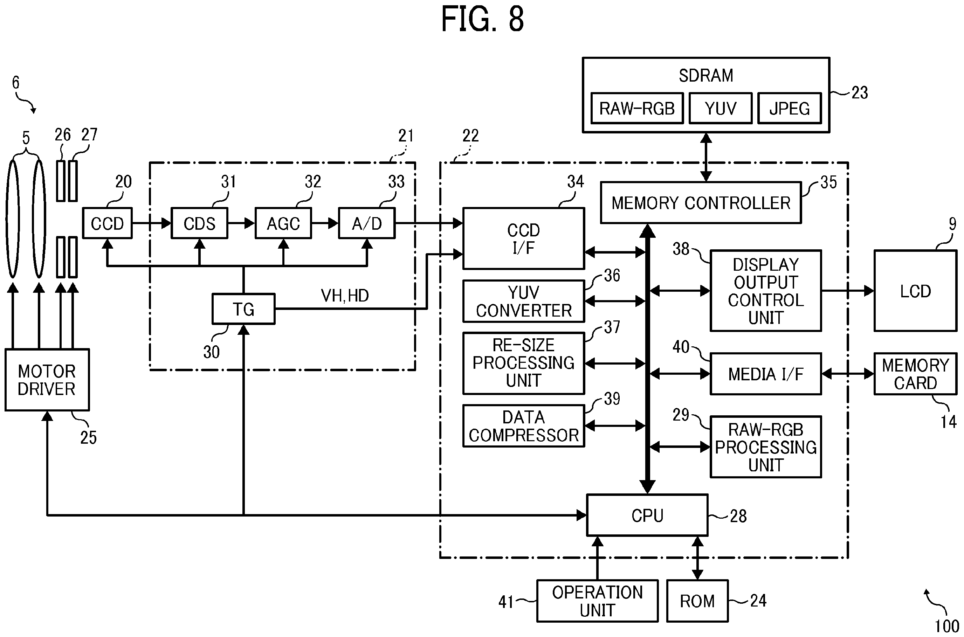

A description is given of an image capturing device according to an example embodiment that conducts the above described method of determining color moiré. FIG. 8 shows a block diagram of an image capturing device according to an example embodiment, and the image capturing device may be, for example, a digital camera but not limited hereto. As shown in FIG. 8, a digital camera 100 includes, for example, an optical unit 6, an analog front end 21, an image signal processing unit 22, a synchronous dynamic random access memory (SDRAM) 23, an operation unit 41, a read only memory (ROM) 24, a liquid crystal display (LCD) 9, and a memory card 14.

The optical unit 6 includes, for example, an optical lens 5, an aperture 26, an internal neutral density (ND) filter 27, a motor driver 25 that drives such units, and a charge coupled device (CCD) 20 used as an image capturing element. The optical unit 6 focuses an image of object onto a light receiving face of the CCD 20 using the optical lens 5.

The analog front end 21 includes, for example, a correlation double sampling (CDS) circuit 31 that processes analog image signals output from the optical unit 6, an automatic gain control (AGC) circuit 32, an analog/digital (A/D) converting circuit 33, and a Tarmy-Ghausi (TG) circuit 30. The CDS circuit 31 reduces noises from analog image signals output from the CCD 20. The AGC circuit 32 adjusts amplification of the analog image signals output from the CDS circuit 31. The A/D converting circuit 33 converts the analog image signals to digital image signals. The TG circuit 30 generates drive signals that instruct operation timing of each of the CCD 20, the CDS circuit 31, the AGC circuit 32, and the A/D converting circuit 33.

The image signal processing unit 22 includes, for example, a CCD interface (I/F) 34, a memory controller 35, a central processing unit (CPU) 28 used as a controlling unit, a RAW-RGB processing unit 29, a YUV converter 36, a re-size processing unit 37, a data compressor 39, a display output control unit 38, and a media interface (I/F) 40.

The digital image data input to the image signal processing unit 22, such as a LSI used for image processing, from the analog front end 21 via the CCD I/F34 is processed by the RAW-RGB processing unit 29 for various correction processes such as defective pixel correction, OB correction, linearity correction or the like. Further, data used for various processing such as automatic exposure (AE), automatic white balance (AWB), auto-focus (AF) or the like can be generated from the digital image data.

The contrast data, required for the determination process, is generated by the RAW-RGB processing unit 29. The RAW-RGB image data generated by the RAW-RGB processing unit 29 is temporarily stored in the SDRAM 23, and then converted to digital image having a given format such as JPEG format, TIFF format or the like by the YUV converter 36. The YUV converter 36 conducts various processing such as color interpolation, gradient correction, color correction, edge enhancement, noise reduction, distortion correction or the like to generate image data having high quality.

Further, the color component difference data, required for the determination process, can be generated by the YUV converter 36, or the color component difference data can be generated by the CPU 28 using a YUV image stored in the SDRAM 23. Further, the CPU 28 conducts a peak computation of the contrast data and color component difference data.

The image capturing device according to an example embodiment can conduct a peak detection of the contrast data and the color component difference data, thereby occurrence of color moiré can be informed to a user when the automatic focus (AF) processing is conducted before capturing image.

### (Image capturing method using spot AF)

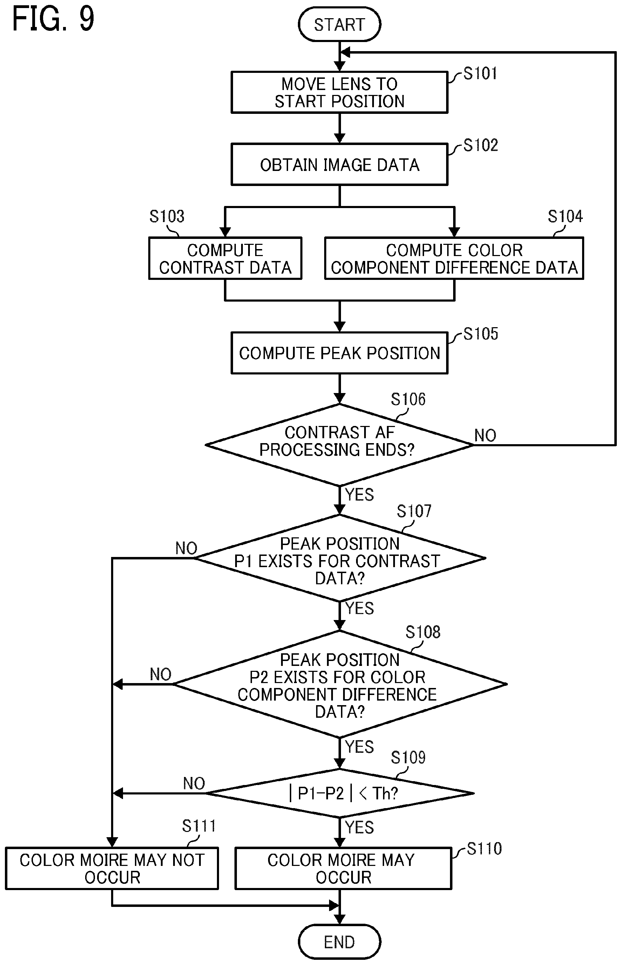

A description is given of an image capturing method according to an example embodiment with reference to FIG. 9, which is a flowchart of the image capturing method. The contrast AF according to an example embodiment employs, for example, a spot AF. As for the spot AF, a given image area is set for digital image data, and contrast data is computed based on image data in the given image area. In the spot AF, based on the contrast data computed in the given image area, a peak position is determined as a focal position. Further, in an example embodiment, color data is also computed using the image data in the image area used for the computation of contrast data.

Specifically, the contrast AF can be activated by moving the optical lens 5 to a scan start postion (S101). A trigger to activate the contrast AF is, for example, a half-push of a shutter button of the digital camera 100 by a user. Upon completing the movement of the optical lens 5 to the given start position, image data is obtained (S102). Then, contrast data is computed based on the obtained image data (S103). Further, the color component difference data or white balance data can be computed based on the obtained image data (S104).

The computed color component difference data is, for example, Cb/Cr component itself or sum of squares of Cb/Cr component such as (Cb^2+Cr^2)^(0.5). Further, if the color component difference data cannot be computed for YUV format, white balance data such as R/Gr and B/Gb can be computed from the above mentioned image data of Bayer format,.

The color moiré determination process according to an example embodiment can use one of the color component difference data and white balance data. For example, the color component difference data is used hereinafter.

Then, the CPU 28 computes the peak position for the contrast data and the color component difference data (S105). The above described processing is conducted repeatedly until the optical lens 5 reaches an end of computation area of contrast data (S106: NO). When the optical lens 5 reaches the end of computation area of the contrast data, it is determined that the contrast AF processing ends (S106: YES).

Upon completing the contrast AF processing, it is determined whether a peak position such as the first lens position P1 exists for contrast data (S107). If the peak position does not exist for contrast data, it may mean that high-frequency component may not be included in an object which is a source of image data (i.e., low probability of high-frequency component), or simply a focal position cannot be identified, in which it is determined that color moiré will not occur (S107: NO, S111).

If the peak position exists for contrast data (S107: YES), a lens position corresponding to the peak position for contrast data is determined as the first lens position P1. The determined first lens position P1 is temporarily stored to the SDRAM 23. Then, it is determined whether a peak position exists for color component difference data (S108). If the peak position does not exist for color component difference data (S108: NO), probability of including color moiré such as folding noise in the concerned image data may be very low, thereby it is determined that color moiré may not occur (S108: NO, S111).

If the peak position exists for color component difference data (S108: YES), a lens position corresponding to the peak position for color component difference data is determined as the second lens position P2. The determined second lens position P2 is temporarily stored to the SDRAM 23. Then, an absolute value of difference between the first lens position P1 corresponding to the focal position of the optical lens 5 and the second lens position P2 corresponding to the peak position for color component difference data is computed. Then, the computed absolute value of difference is compared with a threshold Th set in advance (S109), in which it is determined whether the absolute value of difference is smaller than the threshold Th.

If the second lens position P2 (i.e., peak position of color component difference data) is close to the first lens position P1 (i.e., peak position of contrast data), color moiré may occur with higher probability. Therefore, if the difference between the first lens position P1 and the second lens position P2 is smaller than the threshold Th (S109: YES), it is determined that color moiré may occur (S110). In contrast, If the difference between the first lens position P1 and the second lens position P2 is the threshold Th or more (S109: NO), it is determined that color moiré may not occur (S111). The threshold Th can be set any value, for example, threshold Th can be set based on the depth of field to the first lens position P1.

If it is determined that color moiré may occur (S110), a process to suppress or reduce color moiré may be conducted. For example, an alarm message such as "color moiré will occur" can be displayed on the LCD 9.

Further, the digital camera 100 may include an image processing switching unit that can switch parameters to suppress color moiré, which may be included in the CPU 28. In this configuration, if it is determined that color moiré may occur (S110), a process to suppress or reduce color moiré may be conducted, for example, by using the YUV converter 36. For example, a color difference noise reduction processing can be conducted.

The color difference noise reduction processing is conducted to suppress color difference noise which may occur when an image is captured with high sensitivity. Because color moiré also has higher frequency for the color difference component, color moiré can be suppressed by conducting the color difference noise reduction processing.

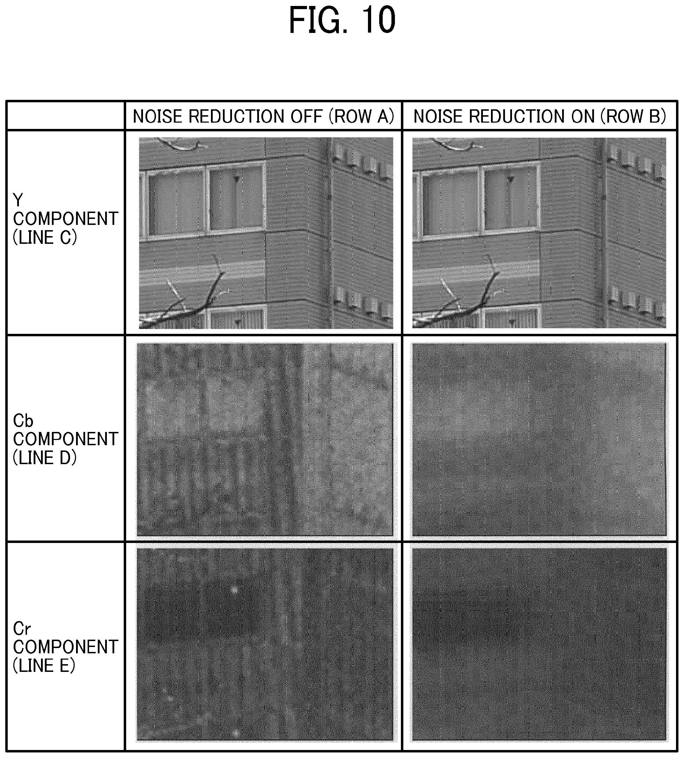

FIG. 10 shows examples of captured image having conducted with the color difference noise reduction processing and captured image not conducted with the color difference noise reduction processing. The image is a wall of building (i.e., object) captured using the sunlight as a light source. In FIG. 10, the image in row A does not receive the color difference noise reduction processing, and the image in row B receives the color difference noise reduction processing. Further, in FIG. 10, Y component (line C), Cb component (line D) and Cr component (line E) of row A and row B are compared with each other.

As shown in FIG. 10, if the color difference noise reduction processing is not conducted, color moiré of stripe pattern occurs on images for Cb component (row A/line D) and Cr component (row A/line E). However, if the color difference noise reduction processing is conducted, color moiré does not occur on images for Cb component (row B/line D) and Cr component (row B/line E).

As described above, by detecting the peak for the color component difference data while the AF processing is being conducted, it can determine whether color moiré may occur. If it is determines that color moiré may occur, parameters to generate YUV image is switched to conduct the color difference noise reduction processing, by which occurrence of color moiré can be suppressed or reduced. The color difference noise reduction processing does not affect luminance component (Y component) and does not degrade the resolution level.

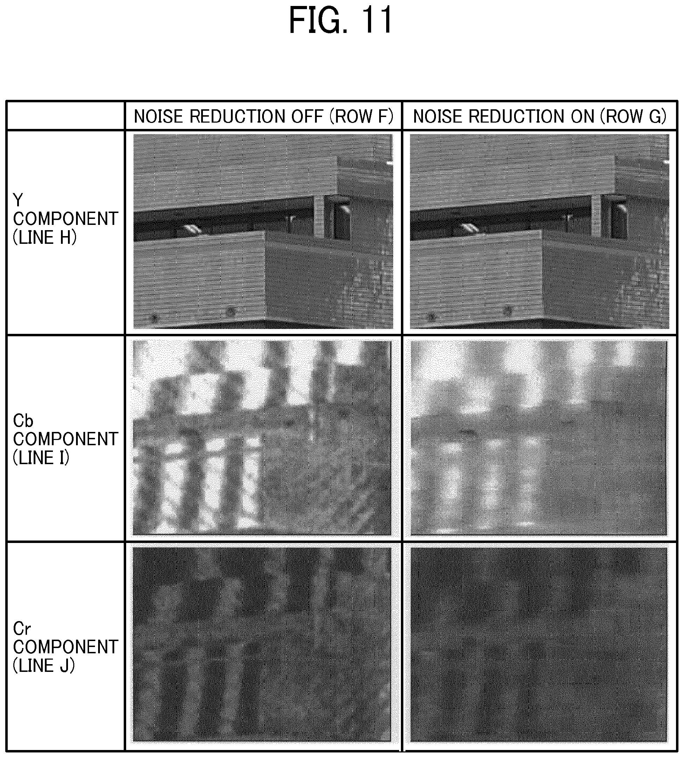

Further, if alias frequency is low, the effect of the color difference noise reduction processing becomes low. FIG. 11 shows examples of captured image having conducted with the color difference noise reduction processing to an image having an alias of low frequency and captured image not conducted with the color difference noise reduction processing to an image of having an alias of low frequency. The image is a wall of building (i.e., object) captured using the sunlight as a light source. In FIG. 11, the image in row F does not receive the color difference noise reduction processing, and the image in row G receives the color difference noise reduction processing. Further, in FIG. 11, Y component (line H), Cb component (line I), Cr component (line J) of row F and row G are compared are compared with each other.

If the color difference noise reduction processing is not conducted, color moiré of stripe pattern occurs on an image for Cb component (row F/line I) and Cr component (row F/line J). If the color difference noise reduction processing is conducted in an image for Cb component (row G/line I) and Cr component (row G /line J), the color difference noise reduction processing is not so effective for color moiré of low frequency, thereby the color moiré cannot be removed effectively.

If the noise reduction level is increased too great, color moiré can be removed from the image shown in FIG. 11, but a side effect such as color bleed may occur to an image of an object sampled normally, thereby image quality may deteriorate.

Color moiré of low frequency can be removed, in particular completely, by conducting the color difference noise reduction processing as follows. For example, the color difference noise reduction processing can be conducted after reducing Cb/Cr component. Further, for example, the color difference noise reduction processing can be conducted after conducting fast Fourier transformation processing to image signal, then converting the frequency space, and conducting a masking process for frequency area of an alias signal. However, an affect to a normally sampled image area occurs even if the masking process is applied, and further, the fast Fourier transformation processing needs a specific hardware (i.e., the fast Fourier transformation processing cannot be conducted without the specific hardware). In view of such situation, the masking process is conducted only to an image area that may cause color moiré of low frequency, and the high level of color difference noise reduction processing may be conducted to the image area having received the masking process.

### (Image capturing method using multi-AF)

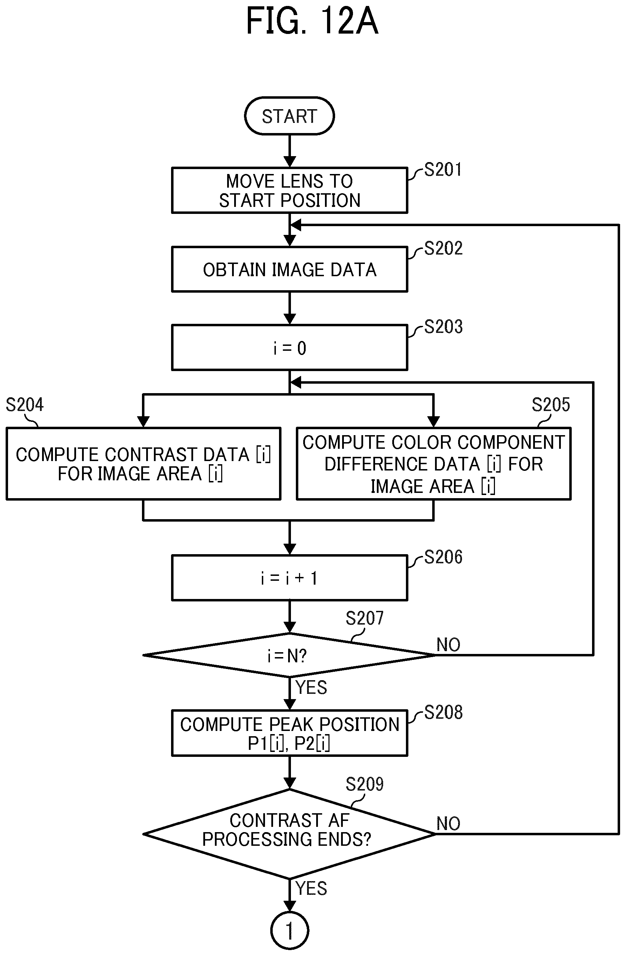

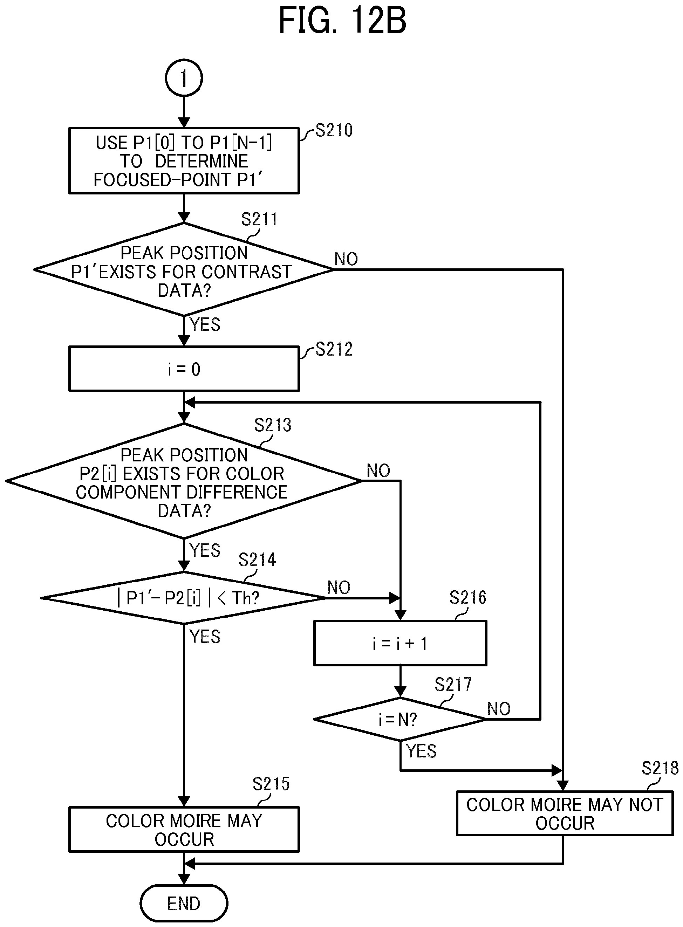

A description is given of an image capturing method according to another example of present invention with reference to FIGs. 12A and 12B, which is a flowchart of the image capturing method. The contrast AF according to another example employs, for example, a multi-AF that conducts contrast AF to a plurality of image areas.

As for the multi-AF, a contrast data computation unit including a first divider and a first computing unit is used, which may be included in the RAW-RGB processing unit 29. The first divider divides digital image data into a plurality of image areas. The first computing unit computes contrast data based on image data for divided each of image areas. In the multi-AF, by using contrast data computed for each of image areas, a peak position for each of image areas is determined, and thereby a focal position is determined.

Similar to the contrast data computation unit, a color data computation unit includes a second divider and a second computing unit, which may be included in the RAW-RGB processing unit 29. The second divider divides digital image data into a plurality of image areas. The second computing unit computes color data based on image data for divided each of image areas. By using color data computed for each one of image areas, a peak position for each of image areas can be determined. Further, the first divider and the second divider can divide digital image data using the same or similar dividing process.

The color moiré determination process according to an example embodiment can use one of the color component difference data and white balance data. For example, the color component difference data is used hereinafter.

For example, the contrast AF can be activated by moving the optical lens 5 to a scan start postion (S201). A trigger to activate the contrast AF is, for example, a half-push of a shutter button of the digital camera 100 by a user. Upon completing the movement of the optical lens 5 to the given start position, image data is obtained (S202). In this case, the image area included in the obtained image data is divided in a plurality of image areas. Specifically, a plurality of image areas is set in advance for the image area for computing contrast data and color data. Therefore, a loop variable [i] to count a loop process is initialized for computing contrast data and the color component difference data for all of the set image areas (S203).

Then, contrast data [i] is computed for image data obtained from image area [i] (i = 0 to N) (S204), and further, the color component difference data [i] for image data obtained from image area [i] (i = 0 to N) is also computed in the image signal processing unit 22 (S205). After computing contrast data [i] and color component difference data [i], "1" is added to the loop variable [i] (S206). Then, it is determined whether the loop variable [i] becomes the total number of image areas [N], which is defined in advance (S207). If the loop variable [i] is not yet the total number N (S207: NO), the computation of contrast data [i] (S204) and the computation of color component difference data (S205) are conducted repeatedly.

If the loop variable [i] is the total number N (S207: YES), the CPU 28 computes the peak position for contrast data [i] (i=0 to N-1) and color component difference data [i] (i = 0 to N-1) (S208). The above described processing from S202 to S209 are conducted repeatedly (S209: NO) by shifiting the positions of the optical lens 5 until the optical lens 5 reaches an end of computation area of contrast data. When the optical lens 5 reaches the end of computation area of the contrast data [i] (i = 0 to N-1), it is determined that the contrast AF processing ends (S209: YES).

Then, based on the first lens position P1 [i] (i = 0 to N-1) corresponding to the peak position of contrast data [i] (i = 0 to N-1) computed at S208, the first lens position P1' which is a finally-determined focal position is computed (S210). If the first lens position P1' is not computed (S211: NO), it may mean that high-frequency component may not be included in an object which is a source of the image data (i.e., low probability of high-frequency component), or simply a focal position cannot be identified, in which it is determined that color moiré may not occur (S218).

If the first lens position P1' is computed (S211: YES), it is determined whether the second lens position P2 [i] ((i = 0 to N-1), which is a peak position, exists for the color component difference data [i]. Initially, the loop variable [i] to count the loop process is initialized (S212).

Then, it is determined whether the second lens position P2 [i] (i = 0 to N-1) exists for the color component difference data [i] (i = 0 to N-1) (S213). If the second lens position P2 [i] does not exist for the color component difference data [i] (S213: NO), "1" is added to the loop variable [i] (S216). Then, it is determined whether the added loop variable [i] becomes the total number of image areas [N] defined in advance (S217). If the added loop variable [i] becomes the total number of image areas [N] (S217: YES), it is determined that the second lens position P2 [i] (i = 0 to N) does not exist. In this case, probability of including color moiré such as folding noise in the concerned image data may be very low, thereby it is determined that color moiré may not occur (S218).

If it is determined that the second lens position P2 [i] (i=0 to N-1) exists for the color component difference data [i] (i = 0 to N-1) (S213: YES), an absolute value of difference between the first lens position P1' (i.e., focal position of the optical lens 5), and the second lens position P2 [i] (i.e., peak position for the color component difference data) is computed. Then, the computed absolute value of difference is compared with a given threshold Th, in which it is determined whether the computed absolute value of difference is smaller than the threshold Th (S214).

If it is determined that the absolute value of difference is greater than the threshold Th (S214: NO), the process of S216 is conducted. Further, if it is determined that the absolute value of difference is smaller than the threshold Th (S214: YES), it is determined that the second lens position P2 [i] (i = 0 to N-1), which is the peak position for color component difference data, exists near the first lens position P1', which is the peak position for contrast data, in which color moiré may occur with higher probability. Therefore, it is determined that that color moiré may occur (S215). The threshold Th can be set any value, for example, threshold Th can be set based on the depth of field to the first lens position P1.

If it is determined that that color moiré may occur (S215), a process to suppress or reduce color moiré may be conducted. For example, an alarm message such as "color moiré will occur" can be displayed on the LCD 9.

Further, the digital camera 100 may include an image processing switching unit that can switch parameters to suppress color moiré, which may be included in the CPU 28. If it is determined that color moiré may occur (S215), a process to suppress or reduce color moiré may be conducted, for example, by using the YUV converter 36.

In this case, for example, one of the first lens position P1 [i] (i = 0 to N) of the obtained contrast data having greater or greatest distance to the second lens position P2 [i] (i = 0 to N) of the color component difference data can be used as the first lens position P1, and then the image capturing process is conducted using the first lens position P1.

Instead, a bracket capturing can be conducted by selecting a plurality of the first lens position P1 [i] ([i] is discretional) from the first lens position P1 [i] (i = 0 to N) as candidates.

Instead, the masking process is conducted for an image area of the color component difference data [i] having a peak near the first lens position P1', and the color difference noise reduction processing is conducted only to the image area having received the masking process. Then, an image processing for image areas, not conducted with the masking process, can be conducted by switching the parameter to a parameter, which has less effect to prevent color moiré such as a parameter that is relatively not so effective for color difference noise reduction.

In the above described example embodiments, occurrence of color moiré can be detected for the digital camera 100 not equipped with an optical low-pass filter. The digital camera 100 can detect occurrence of color moiré based on contrast data and color data generated by processing images in the image signal processing unit 22. By not installing the optical low-pass filter, the digital camera 100 can be compact and thin, and further, by reducing the number of parts, the manufacturing cost of the digital camera 100 can be reduced.

Further, because color moiré can be suppressed without using the optical low-pass filter, the resolution of the optical lens 5 can be effectively used, and image having high image quality can be captured.

### (Color moiré reduction for movie image)

A description is given of an image capturing device according to another example of the present invention. The digital camera 100 of FIG. 8 can include a movie image capture, in which the AF processing can be conducted when displaying through images or capturing movie images. By conducting the above described color moiré determination process and color moiré suppressing process during the AF processing, color moiré can be suppressed or reduced when the image capturing process of movie images is conducted.

The above described image capturing device can capture image with high image quality without using the optical low-pass filter while effectively using the resolution of the optical lens.

In the above described example embodiment of the image capturing device not equipped with the optical low-pass filter, occurrence of color moiré can be detected before capturing process, and color moiré can be suppressed. In the above described example embodiment, occurrence of color moiré can be detected before capturing image, and color moiré can be suppressed.

The present invention can be implemented in any convenient form, for example using dedicated hardware, or a mixture of dedicated hardware and software. The present invention may be implemented as computer software implemented by one or more networked processing apparatuses. The network can comprise any conventional terrestrial or wireless communications network, such as the Internet. The processing apparatuses can compromise any suitably programmed apparatuses such as a general purpose computer, personal digital assistant, mobile telephone (such as a Wireless Application Protocol (WAP) or 3G-compliant phone) and so on. Since the present invention can be implemented as software, each and every aspect of the present invention thus encompasses computer software implementable on a programmable device.

The computer software can be provided to the programmable device using any storage medium, carrier medium, carrier means, or digital data carrier for storing processor readable code such as a flexible disk, a compact disk read only memory (CD-ROM), a digital versatile disk read only memory (DVD-ROM), DVD recording only/rewritable (DVD-R/RW), electrically erasable and programmable read only memory (EEPROM), erasable programmable read only memory (EPROM), a memory card or stick such as USB memory, a memory chip, a mini disk (MD), a magneto optical disc (MO), magnetic tape, a hard disk in a server, a solid state memory device or the like, but not limited these.

The hardware platform includes any desired kind of hardware resources including, for example, a central processing unit (CPU), a random access memory (RAM), and a hard disk drive (HDD). The CPU may be implemented by any desired kind of any desired number of processor. The RAM may be implemented by any desired kind of volatile or non-volatile memory. The HDD may be implemented by any desired kind of non-volatile memory capable of storing a large amount of data. The hardware resources may additionally include an input device, an output device, or a network device, depending on the type of the apparatus. Alternatively, the HDD may be provided outside of the apparatus as long as the HDD is accessible. In this example, the CPU, such as a cache memory of the CPU, and the RAM may function as a physical memory or a primary memory of the apparatus, while the HDD may function as a secondary memory of the apparatus.

In the above-described example embodiment, a computer can be used with a computer-readable program, described by object-oriented programming languages such as C++, Java (registered trademark), JavaScript (registered trademark), Perl, Ruby, or legacy programming languages such as machine language, assembler language to control functional units used for the apparatus or system. For example, a particular computer (e.g., personal computer, work station) may control an information processing apparatus or an image processing apparatus such as image forming apparatus using a computer-readable program, which can execute the above-described processes or steps. In the above described embodiments, at least one or more of the units of apparatus can be implemented in hardware or as a combination of hardware/software combination. In example embodiment, processing units, computing units, or controllers can be configured with using various types of processors, circuits, or the like such as a programmed processor, a circuit, an application specific integrated circuit (ASIC), used singly or in combination.

Numerous additional modifications and variations are possible in light of the above teachings. It is therefore to be understood that, within the scope of the appended claims, the disclosure of the present invention may be practiced otherwise than as specifically described herein. For example, elements and/or features of different examples and illustrative embodiments may be combined each other and/or substituted for each other within the scope of this disclosure and appended claims.

## Claims

1. An image capturing device (100), comprising:
an optical lens (5);
an image capturing element (20) having a light receiving face on which is focused an image of an object using the optical lens (5) and generating an image signal output as image data and stored;
a contrast data computing means (29) to compute contrast data based on the image data;
a color data computing means (29) to compute color data based on the image data;
a first lens position determining means (28) to determine a first lens position of the optical lens where the contrast data peaks based on the contrast data, with the first lens position focusing an object image onto the light receiving face;
a second lens position determining means (28) to determine a second lens position of the optical lens where the color data peaks based on the color data; and **characterized in that** the image capturing device further comprises:
a determining means (28) to compute a difference between the first lens position and the second lens position and compare the difference and a threshold set in advance,
wherein the determining means (28) determines that color moiré occurs when the difference is smaller than the threshold.

2. The image capturing device of claim 1, wherein the color data is a color difference component of the image data.

3. The image capturing device of claim 1, wherein the color data is white balance data of the image data.

4. The image capturing device of any one of claims 1 to 3, wherein the contrast data computing means (29) includes a first divider (29) that divides the image data into a plurality of image areas, and a first computing means (29) that computes contrast data for each one of the plurality of image areas into which the image data is divided by the first divider,
wherein the color data computing means (29) includes a second dividing unit (29) that divides the image data into a plurality of image areas, and a second computing means that computes color data for each one of the plurality of image areas into which the image data is divided by the second dividing unit.

5. The image capturing device of any one of claims 1 to 4, further comprising an image processing switching means (29) to switch parameters used for image processing,
wherein when the determining means (28) determines that color moiré occurs, the image processing switching means (29) switches parameters to conduct an image processing without causing color moiré.

6. The image capturing device of claim 5, further comprising a masking process means (28) to conduct a masking process for one or more image areas of the image data,
wherein the masking process means (28) conducts the masking process on an image area where the determining means (28) determines that color moiré occurs,
wherein the image processing switching means (28) switches parameters used for image areas not receiving the masking process to parameters that are less effective in preventing color moiré.

7. The image capturing device of claim 4, wherein when the contrast data includes a plurality of peaks positions (P1 [i]), an image is captured using each of a selected plurality of said peak positions as the first lens position.

8. The image capturing device of any one of claims 1 to 7, wherein the image data is a movie image.

9. An method of capturing an image using an image capturing device including an optical lens (5), an image capturing element (20) having a light receiving face on which is focused an image of an object using the optical lens (5), an image signal output from the image capturing element being generated as image data and stored, a contrast data computing means (29), a color data computing means (29), a first lens position determining means (28), a second lens position determining means (28), and a determining means (28), the method comprising the steps of:
1) computing the contrast data using the contrast data computing means;
2) computing the color data using the color data computing means;
3) determining the first lens position where the contrast data peaks using the first lens position determining means;
4) determining the second lens position where the color data peaks using the second lens position determining means;
5) computing a difference between the first lens position and the second lens position using the determining means;
6) determining whether the difference is greater than a given threshold using the determining means; and
7) determining that color moiré occurs when the determining step 6) determines that the difference is smaller than the threshold.

10. A non-transitory computer-readable carrier medium storing a program that, when executed by a computer, causes the computer to execute a method of capturing an image using an image capturing device including an optical lens (5), an image capturing element (20) having a light receiving face on which is focused an image of an object using the optical lens (5), an image signal output from the image capturing element being generated as image data and stored, a contrast data computing means (29), a color data computing means (29), a first lens position determining means (28), a second lens position determining means (28), and a determining means (28), the method comprising the steps of:
1) computing the contrast data using the contrast data computing means;
2) computing the color data using the color data computing means;
3) determining the first lens position where the contrast data peaks using the first lens position determining means;
4) determining the second lens position where the color data peaks using the second lens position determining means;
5) computing a difference between the first lens position and the second lens position using the determining means;
6) determining whether the difference is greater than a given threshold using the determining means; and
7) determining that color moiré occurs when the determining step 6) determines that the difference is smaller than the threshold.

11. A computer-readable program that, when executed by a computer, causes the computer to execute a method of capturing an image using an image capturing device including an optical lens (5), an image capturing element (20) having a light receiving face on which is focused an image of an object using the optical lens (5), an image signal output from the image capturing element being generated as image data and stored, a contrast data computing means (29), a color data computing means (29), a first lens position determining means (28), a second lens position determining means (28), and a determining means (28), the method comprising the steps of:
1) computing the contrast data using the contrast data computing means;
2) computing the color data using the color data computing means;
3) determining the first lens position where the contrast data peaks using the first lens position determining means;
4) determining the second lens position where the color data peaks using the second lens position determining means;
5) computing a difference between the first lens position and the second lens position using the determining means;
6) determining whether the difference is greater than a given threshold using the determining means; and
7) determining that color moiré occurs when the determining step 6) determines that the difference is smaller than the threshold.

## Patentansprüche

1. Bildaufnahmevorrichtung (100), die Folgendes umfasst:
eine optische Linse (5);
ein Bildaufnahmeelement (20), das über eine Lichtempfangsfläche verfügt, auf der unter Verwendung der optischen Linse (5) ein Bild eines Objekts fokussiert wird, und das ein Bildsignal erzeugt, das als Bilddaten ausgegeben und gespeichert wird;
ein Kontrastdaten-Berechnungsmittel (29) zum Berechnen von Kontrastdaten basierend auf den Bilddaten;
ein Farbdaten-Berechnungsmittel (29) zum Berechnen von Farbdaten basierend auf den Bilddaten;
ein erstes Linsen-Positionsbestimmungsmittel (28) zum Bestimmen einer ersten Linsenposition der optischen Linse, wo die Kontrastdaten Spitzenwerte erreichen,
basierend auf den Kontrastdaten, wobei die erste Linsenposition ein Objektbild auf die Lichtempfangsfläche fokussiert;
ein zweites Linsen-Positionsbestimmungsmittel (28) zum Bestimmen einer zweiten Linsenposition der optischen Linse, wo die Farbdaten Spitzenwerte erreichen, basierend auf den Farbdaten; und **dadurch gekennzeichnet, dass** die Bildaufnahmevorrichtung ferner Folgendes umfasst:
ein Bestimmungsmittel (28) zum Berechnen einer Differenz zwischen der ersten Linsenposition und der zweiten Linsenposition und zum Vergleichen der Differenz mit einem vorab festgelegten Schwellenwert,
wobei das Bestimmungsmittel (28) bestimmt, dass Farbmoiré auftritt, wenn die Differenz kleiner ist als der Schwellenwert.

2. Bildaufnahmevorrichtung nach Anspruch 1, wobei die Farbdaten eine Farbdifferenzkomponente der Bilddaten sind.

3. Bildaufnahmevorrichtung nach Anspruch 1, wobei die Farbdaten Weißabgleichdaten der Bilddaten sind.

4. Bildaufnahmevorrichtung nach einem der Ansprüche 1 bis 3, wobei das Kontrastdaten-Berechnungsmittel (29) einen ersten Teiler (29), der die Bilddaten in eine Vielzahl von Bildbereichen unterteilt, und ein erstes Berechnungsmittel (29) aufweist, das Kontrastdaten für jeden der Vielzahl von Bildbereichen berechnet, in die die Bilddaten durch den ersten Teiler unterteilt werden,
wobei das Farbdaten-Berechnungsmittel (29) eine zweite Teilungseinheit (29), die die Bilddaten in eine Vielzahl von Bildbereichen unterteilt, und ein zweites Berechnungsmittel aufweist, das Farbdaten für jeden der Vielzahl von Bildbereichen berechnet, in die die Bilddaten durch die zweite Teilungseinheit unterteilt werden.

5. Bildaufnahmevorrichtung nach einem der Ansprüche 1 bis 4, die ferner ein Bildverarbeitungs-Schaltmittel (29) umfasst, um zur Bildverarbeitung verwendete Parameter umzuschalten,
wobei, wenn das Bestimmungsmittel (28) bestimmt, dass Farbmoiré auftritt, das Bildverarbeitungs-Schaltmittel (29) Parameter umschaltet, um eine Bildverarbeitung durchzuführen, ohne Farbmoiré zu verursachen.

6. Bildaufnahmevorrichtung nach Anspruch 5, die ferner ein Maskierprozessmittel (28) umfasst, um einen Maskierprozess für einen oder mehr Bildbereiche der Bilddaten durchzuführen,
wobei das Maskierprozessmittel (28) den Maskierprozess auf einem Bildbereich durchführt, wo das Bestimmungsmittel (28) bestimmt, dass Farbmoiré auftritt,
wobei das Bildverarbeitungs-Schaltmittel (28) Parameter, die für Bildbereiche verwendet werden, die keinen Maskierprozess erhalten, auf Parameter umschaltet, die Farbmoiré weniger effektiv verhindern.

7. Bildaufnahmevorrichtung nach Anspruch 4, wobei, wenn die Kontrastdaten eine Vielzahl Spitzenpositionen (P1 [i]) aufweisen,
ein Bild unter Verwendung jeder einer ausgewählten Vielzahl der Spitzenpositionen als die erste Linsenposition aufgenommen wird.

8. Bildaufnahmevorrichtung nach einem der Ansprüche 1 bis 7, wobei die Bilddaten ein bewegtes Bild sind.

9. Verfahren zur Bildaufnahme unter Verwendung einer Bildaufnahmevorrichtung, die eine optische Linse (5), ein Bildaufnahmeelement (20), das über eine Lichtempfangsfläche verfügt, auf der unter Verwendung der optischen Linse (5) ein Bild eines Objekts fokussiert wird, ein vom Bildaufnahmeelement ausgegebenes Bildsignal, das als Bilddaten generiert und gespeichert wird, ein Kontrastdaten-Berechnungsmittel (29), ein Farbdaten-Berechnungsmittel (29), ein erstes Linsen-Positionsbestimmungsmittel (28), ein zweites Linsen-Positionsbestimmungsmittel (28), und ein Bestimmungsmittel (28) aufweist, wobei das Verfahren folgende Schritte umfasst:
1) Berechnen der Kontrastdaten unter Verwendung des Kontrastdaten-Berechnungsmittels;
2) Berechnen der Farbdaten unter Verwendung des Farbdaten-Berechnungsmittels;
3) Bestimmen der ersten Linsenposition, wo die Kontrastdaten Spitzenwerte erreichen, unter Verwendung des ersten Linsen-Positionsbestimmungsmittels;
4) Bestimmen der zweiten Linsenposition, wo die Farbdaten Spitzenwerte erreichen, unter Verwendung des zweiten Linsen-Positionsbestimmungsmittels;
5) Berechnen einer Differenz zwischen der ersten Linsenposition und der zweiten Linsenposition unter Verwendung des Bestimmungsmittels;
6) Bestimmen, ob die Differenz größer ist als ein gegebener Schwellenwert, unter Verwendung des Bestimmungsmittels; und
7) Bestimmen, dass Farbmoiré auftritt, wenn der Bestimmungsschritt 6) bestimmt, dass die Differenz kleiner ist als der Schwellenwert.

10. Nicht-flüchtiges computerlesbares Trägermedium, das ein Programm speichert, das, wenn es durch einen Computer ausgeführt wird, den Computer dazu veranlasst, ein Verfahren zur Bildaufnahme unter Verwendung einer eine optische Linse (5), ein Bildaufnahmeelement (20), das über eine Lichtempfangsfläche verfügt, auf der unter Verwendung der optischen Linse (5) ein Bild eines Objekts fokussiert wird, ein vom Bildaufnahmeelement ausgegebenes Bildsignal, das als Bilddaten generiert und gespeichert wird, ein Kontrastdaten-Berechnungsmittel (29), ein Farbdaten-Berechnungsmittel (29), ein erstes Linsen-Positionsbestimmungsmittel (28), ein zweites Linsen-Positionsbestimmungsmittel (28), und ein Bestimmungsmittel (28) aufweisenden Bildaufnahmevorrichtung auszuführen, wobei das Verfahren die folgenden Schritte umfasst:
1) Berechnen der Kontrastdaten unter Verwendung des Kontrastdaten-Berechnungsmittels;
2) Berechnen der Farbdaten unter Verwendung des Farbdaten-Berechnungsmittels;
3) Bestimmen der ersten Linsenposition, wo die Kontrastdaten Spitzenwerte erreichen, unter Verwendung des ersten Linsen-Positionsbestimmungsmittels;
4) Bestimmen der zweiten Linsenposition, wo die Farbdaten Spitzenwerte erreichen, unter Verwendung des zweiten Linsen-Positionsbestimmungsmittels;
5) Berechnen einer Differenz zwischen der ersten Linsenposition und der zweiten Linsenposition unter Verwendung des Bestimmungsmittels;
6) Bestimmen, ob die Differenz größer ist als ein gegebener Schwellenwert, unter Verwendung des Bestimmungsmittels; und
7) Bestimmen, dass Farbmoiré auftritt, wenn der Bestimmungsschritt 6) bestimmt, dass die Differenz kleiner ist als der Schwellenwert.

11. Computerlesbares Programm, das, wenn es durch einen Computer ausgeführt wird, den Computer dazu veranlasst, ein Verfahren zur Bildaufnahme unter Verwendung einer eine optische Linse (5), ein Bildaufnahmeelement (20), das über eine Lichtempfangsfläche verfügt, auf der unter Verwendung der optischen Linse (5) ein Bild eines Objekts fokussiert wird, ein vom Bildaufnahmeelement ausgegebenes Bildsignal, das als Bilddaten generiert und gespeichert wird, ein Kontrastdaten-Berechnungsmittel (29), ein Farbdaten-Berechnungsmittel (29), ein erstes Linsen-Positionsbestimmungsmittel (28), ein zweites Linsen-Positionsbestimmungsmittel (28), und ein Bestimmungsmittel (28) aufweisenden Bildaufnahmevorrichtung auszuführen, wobei das Verfahren die folgenden Schritte umfasst:
1) Berechnen der Kontrastdaten unter Verwendung des Kontrastdaten-Berechnungsmittels;
2) Berechnen der Farbdaten unter Verwendung des Farbdaten-Berechnungsmittels;
3) Bestimmen der ersten Linsenposition, wo die Kontrastdaten Spitzenwerte erreichen, unter Verwendung des ersten Linsen-Positionsbestimmungsmittels;
4) Bestimmen der zweiten Linsenposition, wo die Farbdaten Spitzenwerte erreichen, unter Verwendung des zweiten Linsen-Positionsbestimmungsmittels;
5) Berechnen einer Differenz zwischen der ersten Linsenposition und der zweiten Linsenposition unter Verwendung des Bestimmungsmittels;
6) Bestimmen, ob die Differenz größer ist als ein gegebener Schwellenwert, unter Verwendung des Bestimmungsmittels; und
7) Bestimmen, dass Farbmoiré auftritt, wenn der Bestimmungsschritt 6) bestimmt, dass die Differenz kleiner ist als der Schwellenwert.

## Revendications

1. Dispositif de capture d'images (100), comprenant :
une lentille optique (5) ;
un élément de capture d'images (20) comprenant une face de réception de lumière sur laquelle est focalisée une image d'un objet en utilisant la lentille optique (5), un signal de sortie d'image étant généré en tant que données d'image et stocké ;
un moyen de calcul de données de contraste (29) pour calculer des données de contraste à partir des données d'image ;
un moyen de calcul de données de couleur (29) pour calculer des données de couleur à partir des données d'image ;
un moyen de détermination d'une première position de la lentille (28) pour déterminer une première position de la lentille optique lorsque les données de contraste forment un pic à partir des données de contraste, la première position de la lentille focalisant une image objet sur la face de réception de lumière ;
un moyen de détermination d'une deuxième position de la lentille (28) pour déterminer une deuxième position de la lentille optique lorsque les données de couleur forment un pic à partir des données de couleur ; et **caractérisé en ce que** le dispositif de capture d'images comprend en outre :
un moyen de détermination (28) pour calculer une différence entre la première position de lentille et la deuxième position de lentille et comparer la différence et un seuil fixé à l'avance,
le moyen de détermination (28) déterminant qu'un moiré de couleur a lieu lorsque la différence est inférieure au seuil.

2. Dispositif de capture d'images selon la revendication 1, dans lequel les données de couleur sont un composant de différence de couleur des données d'image.

3. Dispositif de capture d'images selon la revendication 1, dans lequel les données de couleur sont des données de balance de blanc des données d'image.

4. Dispositif de capture d'images selon l'une quelconque des revendications 1 à 3, dans lequel le moyen de calcul de données de contraste (29) comprend un premier diviseur (29) qui divise les données d'image en une pluralité de zones d'image, et un premier moyen de calcul (29) qui calcule des données de contraste pour chacune de la pluralité de zones d'image en lesquelles les données d'image sont divisées par le premier diviseur,
le moyen de calcul de données de couleur (29) comprenant une deuxième unité de division (29) qui divise les données d'image en une pluralité de zones d'image, et un deuxième moyen de calcul qui calcule les données de couleur pour chacune de la pluralité de zones d'image en lesquelles les données d'image sont divisées par la deuxième unité de division.

5. Dispositif de capture d'images selon l'une quelconque des revendications 1 à 4, comprenant en outre un moyen de commutation de traitement d'images (29) pour commuter entre des paramètres utilisés pour le traitement d'images,
lorsque le moyen de détermination (28) détermine qu'un moiré de couleur a lieu, le moyen de commutation de traitement d'images (29) commutant les paramètres pour réaliser un traitement d'images sans causer de moiré de couleur.

6. Dispositif de capture d'images selon la revendication 5, comprenant en outre un moyen de procédé de masquage (28) pour réaliser un procédé de masquage pour une ou plusieurs zones d'image des donnés d'image,
le moyen de procédé de masquage (28) réalisant le procédé de masquage sur une zone d'image où le moyen de détermination (28) détermine qu'un moiré de couleur a lieu,
le moyen de commutation de traitement d'images (28) commutant les paramètres utilisés pour les zones d'image ne recevant pas le procédé de marquage en paramètres qui sont moins efficaces pour la prévention d'un moiré de couleur.

7. Dispositif de capture d'images selon la revendication 4, dans lequel, lorsque les données de contraste comprennent une pluralité de positions de pic (P1 [i]), une image est capturée en utilisant chacune d'une pluralité sélectionnée desdites positions de pic en tant que première position de la lentille.

8. Dispositif de capture d'images selon l'une quelconque des revendications 1 à 7, dans lequel les données d'image sont une image de film.

9. Procédé de capture d'une image utilisant un dispositif de capture d'images comprenant une lentille optique (5), un élément de capture d'images (20) comprenant une face de réception de lumière sur laquelle est focalisée une image d'un objet en utilisant la lentille optique (5), un signal de sortie d'image issu de l'élément de capture d'images étant généré en tant que données d'image et stocké, un moyen de calcul de données de contraste (29), un moyen de calcul de données de couleur (29), un moyen de détermination d'une première position de la lentille (28), un moyen de détermination d'une deuxième position de la lentille (28) et un moyen de détermination (28), le procédé comprenant les étapes suivantes :
1) le calcul des données de contraste en utilisant le moyen de calcul de données de contraste ;
2) le calcul des données de couleur en utilisant le moyen de calcul de données de couleur ;
3) la détermination de la première position de la lentille où les données de contraste forment un pic en utilisant le moyen de détermination de la première position de la lentille ;
4) la détermination de la deuxième position de la lentille où les données de couleur forment un pic en utilisant le moyen de détermination de la deuxième position de la lentille ;
5) le calcul de la différence entre la première position de la lentille et la deuxième position de la lentille en utilisant le moyen de détermination ;
6) la détermination de si la différence est supérieure à un seuil donné en utilisant le moyen de détermination ; et
7) la détermination qu'un moiré de couleur a lieu lorsque l'étape de détermination 6) détermine que la différence est inférieure au seuil.

10. Support non transitoire lisible par ordinateur, stockant un programme qui, lorsqu'il est exécuté par un ordinateur, amène l'ordinateur à exécuter une méthode de capture d'une image en utilisant un dispositif de capture d'images comprenant une lentille optique (5), un élément de capture d'images (20) comprenant une face de réception de lumière sur laquelle est focalisée une image d'un objet en utilisant la lentille optique (5), un signal de sortie d'image issu de l'élément de capture d'images étant généré en tant que données d'image et stocké, un moyen de calcul de données de contraste (29), un moyen de calcul de données de couleur (29), un moyen de détermination d'une première position de la lentille (28), un moyen de détermination d'une deuxième position de la lentille (28) et un moyen de détermination (28), le procédé comprenant les étapes suivantes :
1) le calcul des données de contraste en utilisant le moyen de calcul de données de contraste ;
2) le calcul des données de couleur en utilisant le moyen de calcul de données de couleur ;
3) la détermination de la première position de la lentille où les données de contraste forment un pic en utilisant le moyen de détermination de la première position de la lentille ;
4) la détermination de la deuxième position de la lentille où les données de couleur forment un pic en utilisant le moyen de détermination de la deuxième position de la lentille ;
5) le calcul de la différence entre la première position de la lentille et la deuxième position de la lentille en utilisant le moyen de détermination ;
6) la détermination de si la différence est supérieure à un seuil donné en utilisant le moyen de détermination ; et
7) la détermination qu'un moiré de couleur a lieu lorsque l'étape de détermination 6) détermine que la différence est inférieure au seuil.

11. Programme lisible par ordinateur qui, lorsqu'il est exécuté par un ordinateur, amène l'ordinateur à exécuter une méthode de capture d'une image en utilisant un dispositif de capture d'images comprenant une lentille optique (5), un élément de capture d'images (20) comprenant une face de réception de lumière sur laquelle est focalisée une image d'un objet en utilisant la lentille optique (5), un signal de sortie d'image issu de l'élément de capture d'images étant généré en tant que données d'image et stocké, un moyen de calcul de données de contraste (29), un moyen de calcul de données de couleur (29), un moyen de détermination d'une première position de la lentille (28), un moyen de détermination d'une deuxième position de la lentille (28) et un moyen de détermination (28), le procédé comprenant les étapes suivantes :
1) le calcul des données de contraste en utilisant le moyen de calcul de données de contraste ;
2) le calcul des données de couleur en utilisant le moyen de calcul de données de couleur ;
3) la détermination de la première position de la lentille où les données de contraste forment un pic en utilisant le moyen de détermination de la première position de la lentille ;
4) la détermination de la deuxième position de la lentille où les données de couleur forment un pic en utilisant le moyen de détermination de la deuxième position de la lentille ;
5) le calcul de la différence entre la première position de la lentille et la deuxième position de la lentille en utilisant le moyen de détermination ;
6) la détermination de si la différence est supérieure à un seuil donné en utilisant le moyen de détermination ; et
7) la détermination qu'un moiré de couleur a lieu lorsque l'étape de détermination 6) détermine que la différence est inférieure au seuil.
